# EUROPEAN PATENT APPLICATION

(11) **EP 3 772 149 A1**
(43) Date of publication of application: **03.02.2021**
(21) Application number: 19189593.7
(22) Date of filing: 01.08.2019
(51) Int. Cl.: H02J 3/18

(54) **METHOD FOR CONTROLLING POWER FLOW IN AN ELECTRICAL SUPPLY NETWORK**

(71) Applicant: Siemens Energy Global GmbH & Co. KG, 81739 München (DE)
(72) Inventor: Sharma, Kunal, 91058 Erlangen (DE); Blug, Christian, 66287 Quierschied (DE); Delzenne, Maxime, 91052 Erlangen (DE); Kuhn, German, 91052 Erlangen (DE); Rentschler, Alexander, 64625 Bensheim (DE)

(57) **Abstract**

The invention relates to a method for controlling power flow in an electrical supply network. The method according to the invention comprises the steps of providing at least one power flow control device, providing a model of the supply network for estimating the distribution of the power flow in the supply network in accordance with predefined network parameters, simulating the power flow in the network using said model such that at least one potential congestion path in the supply network is identified, wherein, as a result of the simulation, a positioning scheme for the at least one power flow control device is provided, such that congestion in the identified potential congestion path can be avoided, arranging said at least one power flow device in accordance with said positioning scheme, and controlling power flow in said supply network by means of the at least one power flow control device.

## Description

The invention relates to a method for controlling power flow in an electrical supply network.

As a result of new environmental legislation, rights-of-way issues, construction cost increases, deregulation policies and decentralized power generation, there is an increasing recognition of the necessity to utilize the existing transmission system assets to the maximum extent possible.

At the same time high penetration of decentralize renewable generation i.e. wind park based on environment condition, regulation policy of Transmission System Operators (TSO) and Distribution System Operators (DSO) make the operation of transmission system more challenging. In this context, TSOs are facing problems to control the power flow and secure the system efficiently and effectively with existing controller and operation methodology.

The power transmitted over an AC transmission line is a function of the line impedance, the magnitude of sending-end and receiving-end voltages, and the phase angle between these voltages. Traditional controller in transmission system like phase shifting transformers with mechanical tap-changer and fixed series capacitor are used to control power flow. A new generation of power flow controllers is given by Universal power flow controllers (UPFC) comprising two converters coupled to each other by their respective DC sides and connected to the AC network via their AC sides (known e.g. from the article "Comprehensive Power Flow Analyses and Novel Feedforward Coordination Control Strategy for MMC-based UPFC" by Liu et al., Energies 2019).

In current situation any grid is divided in different control areas based on certain agreement. Each control area in the grid must achieve balance between power supplied and power consumed. Control areas achieve this balance with the help of power sales and purchase using tie-lines between control areas. These transactions are normally scheduled in advance based on forecast load, the cost and availability of on-line generation and the capacity available on the transmission system. Further, to establish generous stability margins enabling the system to recover from faults, line and generator outages, and equipment failures results in a significant underutilization of the AC transmission system with current slow conventional controllers.

The object of the invention is to propose an effective and reliable method for controlling power flow in an electrical supply network.

The object is achieved by a method for controlling power flow in an electrical supply network comprising the steps of providing a power flow control device, providing a model of the supply network for estimating the distribution of the power flow in the supply network in accordance with predefined network parameters, simulating the power flow in the network using said model such that at least on potential congestion path in the supply network is identified, wherein, as a result of the simulation, a positioning scheme for the at least one power flow control device is provided, such that congestion in the identified potential congestion path can be avoided, arranging said at least one power flow device in accordance with said positioning scheme, and controlling power flow in said supply network by means of the at least one power flow control device. The present invention is based on the finding that an optimal placement of the power flow control device in the supply network is very much essential in order to obtain the maximum possible efficiency and reliability for the power flow control. In accordance with the present invention, in order to find the best arrangement for the at least one power flow control device the supply network is simulated using a supply network model. The simulation considers possible placements of the one or more power flow control devices and correspondingly finds at least one potential congestion path or network line. The potential congestion path is given by a network path or line where a congestion is probable to occur under certain network conditions, e.g. in case of a fault or an overload. In this manner the at least one power flow device can be utilized in a most effective and reliable way, when arranged according to the positioning scheme provided by the simulation. The power flow control device can e.g. be placed directly in the potential congestion path but it may be in some cases more efficient to place the power flow control device in a network path which is underutilized in case of congestion in the network, as for example in a transmission line next to the potential congestion path.

The simulation is preferably carried out taking into consideration the placement of the power flow device within the supply network in order to determine an optimal power flow distribution in the supply network.

According to an embodiment of the invention the at least power flow control device is an UPFC. The UPFC comprises e.g. a first and a second modular multilevel converter, wherein the converters are connected to each other by their respective dc sides wherein the ac side of each of the converters respectively is connected to a network line (transmission line) of the supply network. The UPFC comprises preferably modular multilevel voltage sourced converters (MMC) with Insulated Gate Bipolar Transistors (IGBT) or other suitable disactivable semiconductor switches (like e.g. IGCT) that are arranged as rectifier at one end and inverter at the other end. Rectifier and inverter are interconnected with a DC link. The converter units are preferably connected to the AC line via shunt connection at one side and via in series connection at the other side. Preferably, transformers at both sides decouple the system with DC link from the AC system and adapt the AC system voltage to required voltage level of the converters. In some applications, the power flow control device can be a Static Synchronous Series Compensator (SSSC) or any other series voltage control device with variable series impedance. The SSSC comprises a voltage source converter coupled with a transformer which is connected in series with a transmission line.

The power flow control device, in particular a UPFC, can be simulated as an additional voltage vector Vc added to a line voltage Vs. The amplitude of Vc can be varied, the angle of Vc can be set to pi/2 with respect to the resulting vector Vs' = Vs + Vc. In this way, the UPFC is represented as a generalized synchronous voltage source.

According to another embodiment of the invention the at least one power flow control device is an PST. The PST is simulated as a predefined phase shift of a line voltage Vs, which is a simple and effective representation of the PST in the simulation.

In further embodiments one or more UPFCs and one or more PSTs are used at the same time, depending on the supply network configuration.

The simulation is preferably carried out using a Mixed-Integer Linear Programming (MILP) algorithm. In particular the MILP algorithm is employed to solve the optimization problem and to run the power flow calculation in the model network.

Preferably the model of the supply network is generated in accordance with information on the capacity of network lines of the supply network. The information can be provided directly by the DSO or the TSO and can comprise information about congestion in various lines and/or information about underutilized lines.

The invention relates further to a data processing arrangement for controlling power flow in an electrical supply network.

The object of the invention is to propose such a data processing arrangement which allows an effective and reliable control of power flow in the network.

The object is achieved by a data processing arrangement comprising a model generator for generating a model of the supply network, said model providing a power flow distribution in the supply network in accordance with predefined network parameters, and a simulation module for carrying out a simulation of the power flow in the modelled supply network such that at least on potential congestion path in the supply network is identified.

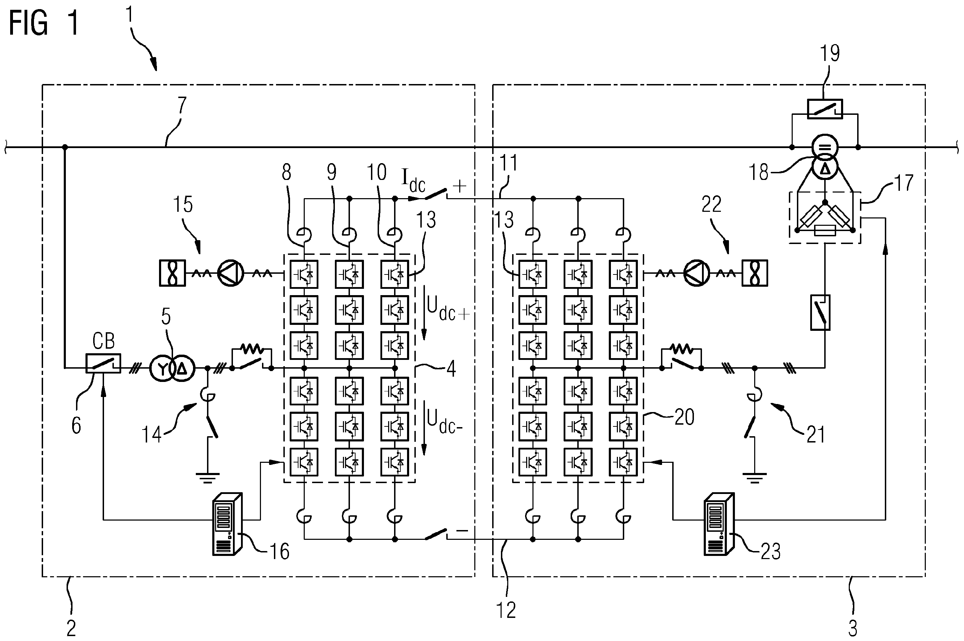

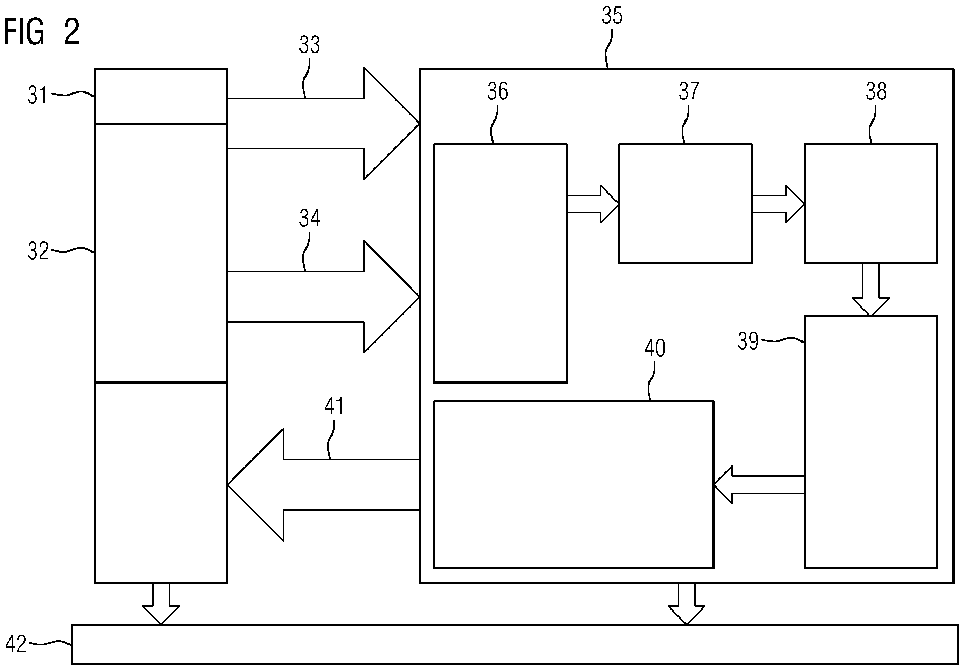

The invention is explained below with reference to exemplary embodiment illustrated in the figures 1 and 2.
Figure 1 shows a schematic view of a UPFC;
Figure 2 shows a schematic view of an exemplary embodiment of a method according to the invention.

In detail, figure 1 shows a universal power flow controller (UPFC) 1. The UPFC 1 comprises a first converter unit 2 and a second converter unit 3. The first converter unit 2 has a first converter 4 which is connected via a transformer 5 and a shunt 6 in parallel to a three-phase network line 7. The first converter 4 is a so-called modular multilevel converter. It comprises three parallel phase modules, wherein each of the phase modules 8-10, wherein each of the phase modules has two converter arms arranged between a respective AC connection and one of two DC poles 11 or 12. Every converter arm comprises an arm choke and a series of submodules 13, wherein each submodule comprises semiconductor switches and an energy storage, e.g. a capacitor. The semiconductor switches and the capacitor of said submodule are e.g. arranged to form a so-called half-bridge circuit, assembled to form a multilevel arrangement. Additionally, the first converter unit 2 comprises a first star point reactor 14, a cooling system 15 and a control arrangement 16 designed to control and/or drive the shunt 6 and the switches of the submodules 13.

The second converter unit 3 comprises a second converter 20 which is a modular multilevel converter similar to the first converter 4. The second converter 20 is on its AC side connected via a fast bypass device 17 and a transformer 18 to the network line 7. A bypass switch 19 is provided for bypassing the second converter 20. Moreover, the second converter unit 3 comprises a second star point reactor 21, a cooling system 22 and a control arrangement 23 designed to control the switches of the submodules 13 and the fast bypass device 17.

The first and the second converter are connected to each other via their respective DC sides forming an intermediate DC link 11, 12.

Figure 2 shows an example of a method in accordance with the invention. The TSO or DSO 31 performs an optimal power flow calculation in block 32 in order to manage an operation planning and the necessary switching procedures. As an output of the calculations performed by the TSO/DSO it provides an information 33 about congestion in various lines of the corresponding supply network and an information 34 about underutilized lines in the network to a grid planner 35. The grid planner defines in a block 36 target functions and other parameters of planning. It also selects a number of power flow control devices such as UPFC or PST to be used for power flow control in the supply network. A model generator in block 37 uses the information provided by block 36 and the information from the TSO/DSO for a model setup using a mixed integer linear programming for modelling the power flow in the network. In block 38 the optimization simulation is run. Given the result of the simulation, in block 39 the solutions are provided concerning the setting and other requirements for the power flow controllers. In block 40 the power flow calculation is run in order to obtain a ranking of locations for the power flow control devices. Preferably a coordinated UPFC operation is taken into account in order to solve the problem of congestions in the network. As an output of the grid planner, an information 41 about the location and also about the operation methodology is provided to the DSO/TSO 31 where a new and improved power flow calculation can be performed based on the provided information. Additionally, the results are also provided in order to facilitate the setup of requirements of new power flow controllers by their respective manufacturers in block 42.

## Claims

1. Method for controlling power flow in an electrical supply network comprising the steps of
- providing at least one power flow control device,
- providing a model of the supply network for estimating the distribution of said power flow in said supply network in accordance with predefined network parameters,
- simulating the power flow in the network using said model such that at least on potential congestion path in the supply network is identified, wherein, as a result of the simulation, a positioning scheme for the at least one power flow control device is provided, such that congestion in the identified potential congestion path can be avoided,
- arranging said at least one power flow device in accordance with said positioning scheme, and
- controlling power flow in said supply network by means of said at least one power flow control device.

2. Method according to claim 1, wherein the simulation is carried out taking into consideration the placement of the power flow device within the supply network in order to determine an optimal power flow distribution in the supply network.

3. Method according to one of the preceding claims, wherein the at least power flow control device is an UPFC or an SSSC or any other series voltage control device with variable series impedance.

4. Method according to claim 3, wherein the UPFC comprises a first and a second modular multilevel converter, wherein the converters are connected to each other by their respective dc sides and the ac side of each of the converters is connected to a network line of the supply network.

5. Method according to one of the claims 3 or 4, wherein the power flow control device is simulated as an additional voltage vector of a line voltage.

6. Method according to one of the preceding claims, wherein the at least one power flow control device is an PST.

7. Method according to claim 6, wherein the PST is simulated as a predefined phase shift of a line voltage.

8. Method according to one of the preceding claims, wherein the simulation is carried out using a MILP algorithm.

9. Method according to one of the preceding claims, wherein the model of the supply network is generated in accordance with information on the capacity of network lines of the supply network.

10. Data processing arrangement for controlling power flow in an electrical supply network comprising
- a model generator for generating a model of the supply network, said model providing a power flow distribution in the supply network in accordance with predefined network parameters,
- a simulation module for carrying out a simulation of the power flow in the modelled supply network such that at least on potential congestion path in the supply network is identified, wherein, as a result of the simulation, a positioning scheme for the at least one power flow control device is provided, such that congestion in the identified potential congestion path can be avoided.
